# EUROPÄISCHE PATENTANMELDUNG

(11) **EP 1 775 007 A2**
(43) Veröffentlichungstag der Anmeldung: **18.04.2007**
(21) Anmeldenummer: 06016801.0
(22) Anmeldetag: 11.08.2006
(51) Int. Cl.: B01D 45/16

(54) **Kartusche zum Reinigen von Druckluft in Druckluftbeschaffungsanlagen von Kraftfahrzeugen**

(30) Priorität: 18.08.2005 DE 102005039059
(71) Anmelder: Haldex Brake Products GmbH, 69123 Heidelberg (DE)
(72) Erfinder: Dubinji, Dean, 69214 Eppelheim (DE); Berdesinski, Michael, 69168 Wiesloch (DE)
(74) Vertreter: Rehberg Hüppe + Partner

(57) **Zusammenfassung**

Eine Kartusche zum Reinigen von Druckluft in Druckluftbeschaffungsanlagen von Kraftfahrzeugen weist ein Gehäuse (3) auf, in welchem ein Behandlungsmittel und/oder ein Filtermittel untergebracht ist. Im Gehäuse (3) der Kartusche (1) ist ein Zyklon (15) vorgesehen, der einen tangential angeordneten Einlass (17) für die verunreinigte Druckluft, einen zentral angeordneten ersten Auslass (18) für die gereinigte Druckluft und einen radial gebildeten zweiten Auslass (19) für die festen und/oder flüssigen Verunreinigungen in der Druckluft aufweist.

## Beschreibung

Die Erfindung betrifft eine Kartusche zum Reinigen von Druckluft in Druckluftbeschaffungsanlagen von Kraftfahrzeugen, mit einem Gehäuse, in welchem ein Behandlungsmittel und/oder ein Filtermittel untergebracht sind. Unter einem Behandlungsmittel wird insbesondere ein Trockenmittel verstanden, also beispielsweise ein Granulat, welches geeignet und dazu bestimmt ist, insbesondere Flüssigkeiten aufzunehmen. Unter Filtermittel werden vorwiegend Mittel aus Gewebe, Papier oder dergleichen verstanden, die dazu dienen, feste Verunreinigungen in der verunreinigten Druckluft aufzufangen. Unter einem Behandlungsmittel oder einem Filtermittel kann auch ein Filter verstanden werden, der als Koaleszenzfilter arbeitet und dazu ausgebildet und bestimmt ist, Verunreinigungen in der Druckluft zu sammeln und zu größeren Partikeln oder Einheiten zusammenzubringen. Die von den verschiedenen Mitteln aufgefangenen Verunreinigungen aus der Druckluft, die vom Kompressor zu einer Druckluftaufbereitungsanlage strömt, werden in der Regenerationsphase, die bekanntlich von einem Druckregler geschaltet wird, in die Atmosphäre abgeführt, so dass eine entsprechende periodische Reinigung der Kartusche stattfindet.

### STAND DER TECHNIK

Kartuschen der eingangs beschriebenen Art sind beispielhaft aus der WO 01/26783 A1, DE 103 13 575 A1 oder auch der DE 103 29 401 A1 bekannt. Solche Kartuschen sind in der Regel als Austauschelemente ausgebildet und müssen nach einer gewissen Betriebszeit erneuert werden. Sie besitzen in der Regel eine Verbindungsstelle zu einem Sockelteil. Die Verbindungsstelle ist oft als Verschraubung ausgebildet, wobei gleichzeitig entsprechende Dichtungen zwischen der Kartusche und dem Sockelteil in Wirkfunktion gebracht werden. Die bekannten Kartuschen zum Reinigen von Druckluft in Druckluftbeschaffungsanlagen weisen die verschiedenen Behandlungs- und Filtermittel auf, einschließlich solcher Filter, die als Gewebefilter oder Koaleszenzfilter ausgebildet sind.

In Druckluftbeschaffungsanlagen enthält die vom Kompressor zu der Druckluftaufbereitungsanlage herangeführte Druckluft eine Vielzahl von Verunreinigungen teils in flüssiger, teils in fester Form. Es handelt sich dabei um Schmutzpartikel aus der Luft, zum größeren Teil aber auch um Rückstände von Schmiermitteln des Kompressors, um eingeschleppte Feuchtigkeit aus der angesaugten Luft usw. Diese festen und flüssigen Verunreinigungen in der Druckluft müssen möglichst vollständig entfernt werden, wobei sie in der Lastlaufphase in der Kartusche abgeschieden und zwischengelagert werden. Bei der Regeneration des so genannten Lufttrockners in der Leerlaufphase findet dann in entsprechenden Abständen eine entsprechende Reinigung der Kartusche statt, die jedoch nur teilwirksam ist, so dass es nach mehr oder weniger langen Einsatzzeiten solcher Kartuschen erforderlich wird, eine zugesetzte und damit verbrauchte Kartusche gegen eine neue auszutauschen.

Die Lebensdauer bzw. die Einsatzdauer solcher Kartuschen ist erfahrungsgemäß begrenzt. Es wurden Kartuschen vorgefunden, die bereits nach einer normalen Betriebszeit eines Nutzfahrzeugs von einem Monat so verschmutzt waren, dass ein Austausch erforderlich war. Diese Betriebszeiten von einem Monat werden als zu gering angesehen. Die in Kartuschen eingesetzten verschiedenen Behandlungsmittel und/oder Filtermittel wirken zwar bis zu gewissem Grade selektiv, beeinflussen einander aber dennoch, indem beispielsweise ein Trockenmittel, welches zur Aufnahme von Feuchtigkeit bestimmt ist, auch mit Schmutzpartikeln zugesetzt wird. Bei den eingesetzten Koaleszenzfiltern kommt es auch zum Abscheiden einer Flüssigkeit, die dann in Verbindung mit den gebildeten Partikeln zu einem Zusetzen der Koaleszenzfilter führen. Oft sind die verschiedenen Behandlungs- und Filtermittel so untergebracht, dass Bypass-öffnungen freigegeben werden, wenn ein Behandlungsmittel oder Filtermittel zugesetzt ist. Dies führt aber dann lediglich dazu, dass die anderen Behandlungs- und/oder Filtermittel höher beansprucht werden und insoweit letztendlich auch eine Verkürzung der Einsatzzeit eintritt.

Aus der WO 02/060735 A1 ist es bekannt, in einem modularen Luftversorgungssystem eine Kartusche einzusetzen, die einen Zyklon besitzt, der einer Abscheidung von Öl, Wasser oder anderen Verunreinigungen in komprimierter Luft dient.

Die US 2,009,352 offenbart eine Filtereinrichtung für Luft oder Gas, bei der ein verunreinigtes Fluid radial in eine sich nach unten konusförmig verjüngende Kammer eintritt. Hierdurch soll eine Zirkulation der verunreinigten Luft nach unten erzeugt werden. Gelangt in dem sich verjüngenden Bereich das zirkulierende Fluid in ein Zentrum der Kammer, soll sich die Strömungsrichtung des Fluids derart verändern, dass sich eine spiralförmig um das Zentrum der Kammer zirkulierende und nach oben orientierte Strömung ausbilden soll, die dazu führt, dass das Fluid durch eine Öffnung im Zentrum des Filters nach oben austritt. Infolge der zuvor erwähnten wirbelförmigen und spiralförmigen Strömung wird ein Kondensat oder Flüssigkeit, die in dem Fluid enthalten ist, aus diesem herausgeworfen und lagert sich an einer unteren inneren Stirnwand der Wandung der Kammer ab, von der das Kondensat oder die Flüssigkeit dann in eine Aufnahmekammer rinnt.

Die US 5,746,795 offenbart für ein abweichendes Technologiefeld eine Luftreinigungseinrichtung mit einem selbstreinigenden, austauschbaren Filter zur Reinigung von Luft in Fabriken, Werkstätten oder ähnlichen Bereichen, in denen bei einer Holzbearbeitung Holzpartikel oder Späne aus der Luft beseitigt werden müssen. Hierzu besitzt die Reinigungseinrichtung einen radialen Einlass sowie einen radialen Auslass. Von dem Einlass strömt die verunreinigte Luft in einem hohlzylinderförmigen Raum nach unten. Gereinigte Luft wird im Inneren des Hohlzylinders durch ein Rohr nach oben geleitet, während die Verunreinigungen über einen Trichter nach unten in einen Abfallbehälter gelangen.

### AUFGABE DER ERFINDUNG

Der Erfindung liegt die Aufgabe zugrunde, eine austauschbare Kartusche zum Reinigen von Druckluft in Druckluftbeschaffungsanlagen von Kraftfahrzeugen bereitzustellen, die eine vergleichsweise erhöhte Lebensdauer aufweist. Die Einsatzzeit der Kartusche, während der eine wirkungsvolle Abscheidung erwartet werden kann, soll in solche Größenordnungen angehoben werden, die technisch sinnvoll und für den Anwender akzeptabel sind.

### LÖSUNG

Erfindungsgemäß wird dies durch die Merkmale der unabhängigen Patentansprüche 1 und 3 erreicht.

### BESCHREIBUNG DER ERFINDUNG

Die Erfindung geht von dem Gedanken aus, den bisher bekannten Behandlungs- und/oder Filtermitteln ein weiteres hinzuzufügen, welches auf einer anderen Wirkungsweise basiert. Es ist im Gehäuse der Kartusche mindestens ein Zyklon vorgesehen. Der Zyklon weist einen tangential angeordneten Einlass für die verunreinigte Druckluft auf. Mit diesem tangential angeordneten Einlass wird die in den Zyklon eingeführte Druckluft in eine Drallströmung versetzt, die sich entlang der Wandung des Zyklons ausbildet. Die auftretenden Fliehkräfte sorgen dafür, dass Teilchen mit schwererer Masse in den äußeren Bereich des Zyklons nahe der Wandung gelangen, während leichtere Bestandteile, z. B. die Luft, dieser Wirkung nur begrenzt unterliegen. Durch die in einem Zyklon auftretende Drallströmung, die als Primärströmung bezeichnet werden kann, entsteht umgekehrt eine Sekundärströmung, die sich im achsnahen Bereich, also im axialen Mittelbereich des Zyklons, ausbildet. Die Primärströmung wird dazu genutzt, feste und flüssige Verunreinigungen von der Sekundärströmung, die die weitgehend gereinigte Druckluft enthält, zu trennen. Neben dem tangential angeordneten Einlass besitzt ein solcher Zyklon zwei Auslässe, nämlich einen ersten zentral angeordneten Auslass für die gereinigte Druckluft und einen radial gebildeten zweiten Auslass für die festen und/oder flüssigen Verunreinigungen in der Druckluft. Die festen und/oder flüssigen Verunreinigungen werden damit mit Abstand zu der Achse des Zyklons aufgesammelt, geführt bzw. angereichert und gelangen auf ihrem Strömungspfad durch den zweiten Auslass aus dem Zyklon heraus.

Mit der Erfindung wird ein weiteres Behandlungsmittel und/oder Filtermittel bzw. ein prinzipiell anders wirkendes zusätzliches Abscheidemittel in Form des Zyklons in eine solche Druckluftbeschaffungsanlage eines Kraftfahrzeugs integriert, insbesondere in eine auswechselbare Kartusche hinein. Der oder die Zyklone werden dabei vorteilhaft zu einem recht frühen Anfangsbereich des Strömungswegs der Luft durch die Kartusche eingesetzt, um möglichst frühzeitig feste und/oder flüssige Verunreinigungen aus der Druckluft abzuscheiden und damit die anderen Behandlungsmittel und/oder Filtermittel zu entlasten. Es stört jedoch nicht, wenn dem Zyklon ein insbesondere grobes Vorfilter vorgeschaltet ist, dessen Verschmutzung sich erfahrungsgemäß in Grenzen hält.

Als zentral angeordneter erster Auslass kann ein rohrförmiges Element vorgesehen sein, also eine Hülse, ein Schlauch, ein Rohrstück oder dergleichen, dessen eines der Einströmung der gereinigten Druckluft dienendes Ende unterhalb des tangentialen Einlasses angeordnet ist. Dies bezieht sich auf eine Anordnung, bei der Zyklon mit seiner Achse vertikal ausgerichtet ist. Der Zyklon lässt sich jedoch auch in jeder anderen beliebigen Relativlage einbauen und anwenden, beispielsweise mit horizontal angeordneter Achse. Dies setzt allerdings eine bestimmte Strömungsgeschwindigkeit voraus.

Das freie Ende des rohrförmigen Elements sollte etwa im Mittelbereich der axialen Erstreckung des Zyklons angeordnet sein, um die Sekundärströmung der gereinigten Druckluft optimal zu erfassen und abzuführen. Vorzugsweise erstreckt sich das rohrförmige Element bei vertikaler Anordnung des Zyklons nach oben, so dass also der erste Auslass für die gereinigte Druckluft nach oben führt, während der zweite Auslass für die festen und/oder flüssigen Verunreinigungen in der Druckluft nach unten führt. Damit ergibt sich eine kleine Bauweise, wie sie für die Unterbringung des Zyklons in der Kartusche sinnvoll ist. Der Zyklon weist also bevorzugt eine etwa vertikal angeordnete Achse und in allen Fällen eine Wandung auf. Für die Wandung ergeben sich verschiedene Konstruktionsmöglichkeiten. In der einfachsten Form kann die Wandung zylindrisch ausgebildet sein. Dies setzt eine entsprechend hohe Geschwindigkeit der strömenden Druckluft in dem tangentialen Einlass voraus. Wirkungsvoller sind konische, sich entlang des Strömungspfades zwischen Einlass und zweitem Auslass verjüngende Ausbildungen, die auch kegelförmig, konvex oder konkav ballig ausgebildet sein können. All diese Ausführungsformen zielen darauf ab, die Strömung innerhalb des Zyklons in Richtung auf den zweiten Auslass zu beschleunigen. Ein solcher Zyklon, der zur Abscheidung der festen und/oder flüssigen Verunreinigungen dient, hat gegenüber den anderen Behandlungs- oder Filtermitteln den wesentlichen Vorteil, dass eine Bindungswirkung des abgeschiedenen Materials an den Zyklon kaum eintritt, da die Wandung des Zyklons durch die nachfolgende Strömung der Druckluft immer wieder gereinigt und damit freigehalten wird. Die abgeschiedenen festen und/oder flüssigen Verunreinigungen werden in einem sich an den Zyklon anschließenden Sammelraum aufgenommen und in der Regenerationsphase abgeführt.

Es ist sinnvoll, wenn der Zyklon an seinem einen Ende den Einlass und an seinem anderen Ende den zweiten Auslass aufweist, während der erste Auslass vorzugsweise nach oben hinwegführt.

In einer austauschbaren Kartusche lässt sich ohne weiteres ein einzelner Zyklon mit relativ großen geometrischen Abmessungen geschickt unterbringen. Im Allgemeinen verbraucht ein solcher Zyklon nur einen geringen Teil des Raums der Kartusche, so dass hinreichend Raum für die Unterbringung der anderen Behandlungs- und/oder Filtermittel verbleibt. Es ist aber auch möglich, eine Mehrzahl von Zyklonen ringförmig verteilt im Gehäuse der Kartusche anzuordnen. Es versteht sich, dass dann der Strömungspfad aufgespalten wird. Die Zyklone können in Parallelschaltung betrieben werden. Zusätzlich oder alternativ dazu ist es auch möglich, die Zyklone in Reihenschaltung hintereinander zu betreiben. Die Hintereinanderschaltung in Reihe wird sich allerdings nur auf wenige Reinigungsstufen beziehen.

Unter jedem Zyklon ist ein Sammelraum für die festen und/oder flüssigen Verunreinigungen aus der Druckluft vorgesehen. Der zweite Auslass des oder der Zyklone mündet in diesen Sammelraum, so dass die abgeschiedenen Verunreinigungen dort aufgefangen werden und der Zyklon selbst bei seiner weiteren Arbeit durch abgeschiedene feste und/oder flüssige Verunreinigungen nicht belastet wird.

Es gibt weitere konstruktive Einzelheiten, die die Wirkungsweise eines solchen Zyklons an der beschriebenen speziellen Einsatzstelle begünstigen oder unterstützen. So kann im Bereich des zweiten Auslasses für die festen und/oder flüssigen Verunreinigungen ein Gewinde vorgesehen sein. Dieses Gewinde erstreckt sich bevorzugt über einen gewissen Bereich der axialen Erstreckung des Zyklons im Bereich des zweiten Auslasses. Durch die Gewindegänge wird ein Strömungspfad beispielsweise für Flüssigkeit vorgebildet, in welchem die Flüssigkeit von der Sekundärströmung der Luft geschützt nach unten geführt wird, während sich die Sekundärströmung nach oben erstreckt. Damit wird verhindert, dass die Sekundärströmung Flüssigkeit ungewollt in die falsche Richtung abführt. Im Bereich des zweiten Auslasses für die festen und/oder flüssigen Verunreinigungen kann auch eine Sperrplatte angeordnet sein. Zwischen der Sperrplatte und der Wandung des Zyklons ergibt sich ein ringförmiger Durchtrittsspalt. Die Größe dieses Spalts kann durch eine Verstellung der Sperrplatte verändert werden. Die Sperrplatte hat die Wirkung, die Sekundärströmung zu beeinflussen und insbesondere ihre Einwirkung auf die Ableitung der festen und/oder flüssigen Verunreinigungen nach unten in den Sammelraum zu verhindern. Der zweite Auslass sollte einen Durchtrittsquerschnitt zu dem Sammelraum aufweisen, der größer als der Durchtrittsquerschnitt des ersten Auslasses bemessen ist. Auch dies zielt darauf ab, eine wirksame Trennung zwischen den festen und/oder flüssigen Verunreinigungen einerseits und der gereinigten Druckluft andererseits herbeizuführen.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Im Folgenden wird die Erfindung anhand in den Figuren dargestellter bevorzugter Ausführungsbeispiele weiter erläutert und beschrieben.
**Fig. 1** zeigt einen Vertikalschnitt durch eine erste Ausführungsform der austauschbaren Kartusche.
**Fig. 2** zeigt eine Schnittdarstellung zur Verdeutlichung des tangential angeordneten Einlasses des Zyklons.
**Fig. 3** zeigt einen Vertikalschnitt durch eine zweite Ausführungsform der Kartusche, wobei hier nur ein einziger Zyklon vorgesehen ist.
**Fig. 4** zeigt einen Vertikalschnitt durch eine Kartusche mit Vorfilter, einer Reihe von Zyklonen, einem Koaleszenzfilter und einem Behandlungsmittel in Form eines Trocknungsgranulats.
**Fig. 5** zeigt einen Vertikalschnitt durch eine Ausführungsform, bei der jeweils zwei Zyklone in Reihe hintereinander geschaltet und mehrere Zyklone in Parallelschaltung angeordnet sind.
**Fig. 6** zeigt einen Vertikalschnitt durch eine Kartusche mit einem Zyklon mit zylindrischer Wandung.
**Fig. 7** zeigt einen Vertikalschnitt durch einen Zyklon mit sich konkav verjüngender Wandung.
**Fig. 8** zeigt einen Vertikalschnitt durch einen Zyklon mit balliger, also sich konvex verjüngender Wandung.
**Fig. 9** zeigt einen Vertikalschnitt durch eine weitere Ausführungsform der Kartusche mit einem einzelnen Zyklon.
**Fig. 10** zeigt schließlich einen Vertikalschnitt durch eine weitere Ausführungsform.

### FIGURENBESCHREIBUNG

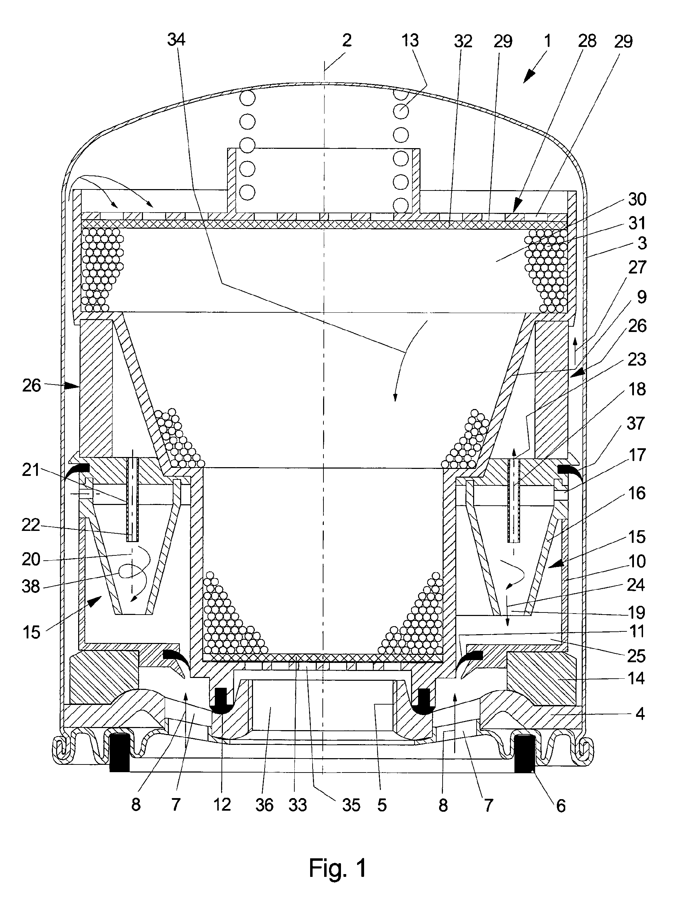

In **Fig. 1** ist eine erste Ausführungsform der Kartusche 1 wiedergegeben. Die Kartusche 1 weist eine vertikal ausgerichtete Achse 2 auf. Wesentlicher äußerer Bestandteil der Kartusche 1 ist ein Gehäuse 3, welches also ebenfalls die Achse 2 besitzt. Die Kartusche 1 ist weitgehend rotationssymmetrisch aufgebaut. Sie weist in ihrem unteren Bereich eine Schraubplatte 4 auf, die zum Anschluss an ein nicht dargestelltes Sockelteil ausgebildet ist. Zu diesem Zweck besitzt die Schraubplatte 4 ein Gewinde 5. Sie trägt auf der dem Sockelteil zugekehrten Seite eine Dichtung 6. Das Gehäuse 3 ist mit der Schraubplatte 4 dauerhaft verbunden, beispielsweise durch eine Umbördelung, Verschweißung oder dergleichen. Die Schraubplatte weist eine Reihe von Einströmöffnungen 7 auf, durch die die zu reinigende Druckluft gemäß Pfeil 8 in die Kartusche 1 einströmt.

Im Innenraum des Gehäuses 3 befindet sich ein Einsatz 9, der, wie dargestellt, gestuft ausgebildet ist und verschiedene Unterbringungsräume für Filtermittel, Behandlungsmittel und weitere Elemente bereitstellt. Dem Einsatz 9 ist ein Tragkäfig 10 zugeordnet, der etwa im Mittelbereich des Einsatzes 9 an diesen anschließt und sich gehäuseartig nach unten erstreckt. Der Tragkäfig 10 trägt an seinem unteren Ende eine Dichtlippe 11. Der Einsatz 9 weist an seinem unteren Ende eine Dichtung 12 auf, mit der er sich dichtend an der Schraubplatte 4 abstützt.

Eine vorgespannte Feder 13 ist zwischen Gehäuse 3 und einem Deckel 28 des Einsatzes 9 vorgesehen.

Zwischen dem Tragkäfig 10 und der Schraubplatte 4 ist ein grobes Vorfilter 14 eingeschaltet und angeordnet, welches als Gewebefilter ausgebildet sein kann. Die zu reinigende Druckluft wird, wie dargestellt, zunächst durch dieses Vorfilter 14 hindurch geleitet, wobei größere feste Partikel abgeschieden bzw. zurückgehalten werden.

Zwischen dem Einsatz 9 und dem Tragkäfig 10 sind hier über den Umfang verteilt eine Mehrzahl Zyklone 15 untergebracht. Jeder Zyklon 15 besitzt hier eine sich kegelförmig verjüngende Wandung 16 mit einem Einlass 17 im oberen Bereich, einem ersten Auslass 18 für die gereinigte Druckluft und einem zweiten Auslass 19 für die festen und/oder flüssigen Verunreinigungen in der Druckluft. Die Zyklone 15 sind hier selbst mit vertikal ausgerichteten Achsen 20 angeordnet. Der erste Auslass 18 ist hier in Form eines Rohrs 21 vorgesehen, welches sich von oben her durch den Tragkäfig 10 hindurch nach unten in das Innere des Zyklons 15 erstreckt. Es ist erkennbar, dass das freie Ende 22 des Rohrs 21, durch welches die gereinigte Druckluft gemäß Pfeil 23 nach oben strömt, tiefer angeordnet ist als der Einlass 17. Das freie Ende 22 befindet sich also im Mittelbereich der axialen Erstreckung des Zyklons 15, also in einem Bereich, in welchem es einerseits noch einen hinreichenden Abstand zu der Wandung 16 besitzt und andererseits die Sekundärströmung wirkungsvoll erfasst. Dies zielt darauf ab, auf keinen Fall feste und/oder flüssige Verunreinigungen über den ersten Auslass 18 ungewollt abzuführen. Der zweite Auslass 19, der am unteren Ende der Wandung 16 des Zyklons 15 gebildet ist, besitzt einen freien Durchtrittsquerschnitt, der größer ausgebildet ist, als der freie Durchtrittsquerschnitt des Rohrs 21. Auf diese Weise wird sich die Strömung der verunreinigten Druckluft, die über den Einlass 17 in das Innere des Zyklons eingeführt wird, schraubenlinienförmig an der Wandung 16 nach unten bewegen, so dass in dieser Primärströmung die festen und/oder flüssigen Verunreinigungen gemäß Pfeil 24 nach unten geführt werden und in einen Sammelraum 25 übertreten, in welchem sie temporär aufgenommen werden. Im axialen Mittelbereich um die Achse 20 herum bildet sich eine Luftströmung als Sekundärströmung aus, die entgegengesetzt also nach oben gerichtet ist. Die gereinigte Luft wird gemäß Pfeil 23 einem Koaleszenzfilter 26 zugeführt. Dieser Koaleszenzfilter 26 hat die Wirkung, feine Bestandteile zu größeren Partikeln zusammenzufügen und abzuscheiden, so dass die Druckluft nach dem Durchströmen des Koaleszenzfilters 26 weiter gereinigt ist. Die Druckluft strömt dann auf ihrem Strömungspfad gemäß Pfeil 27 weiter nach oben, wobei sich im Bereich einer kuppelförmigen Ausbildung des Gehäuses 3 die Strömungsrichtung umkehrt. Es ist dort der Deckel 28 des Einsatzes 9 mit Durchbrechungen 29 vorgesehen. Der Deckel 28 ist gegenüber dem Einsatz 9 frei beweglich. Der Einsatz 9 weist einen Innenraum 30 auf, der mit einem Trockenmittel 31 gefüllt ist. Der Deckel 28 stützt sich über das Trockenmittel 31 ab, so dass sich die Kraft der Feder 13 auch auf den Einsatz 9 und damit die Dichtung 12 auswirkt. Unter dem Deckel 28 kann eine Filzscheibe 32 angeordnet sein, die das Trockenmittel 31 vor einem Austritt durch die Durchbrechungen 29 schützt. Eine weitere Filzscheibe 33 befindet sich am unteren Ende des Innenraums 30. Damit ist sichergestellt, dass die gereinigte Druckluft, die in der Regel nur noch Feuchtigkeit enthält, gemäß Pfeil 34 das Trockenmittel 31 bzw. den Innenraum 30 von oben nach unten durchströmt. Die Druckluft durchströmt damit auch die Filzscheibe 33 und gelangt über Durchbrechungen 35 im Einsatz 9 durch eine Mittelöffnung 36 der Schraubplatte 4 hindurch in den nicht dargestellten Sockelteil, über den die gereinigte Druckluft dann über entsprechende Leitungsverbindungen mit den üblichen darin angeordneten Elementen, beispielsweise Mehrkreisschutzventile, Überströmventile, Druckbegrenzungsventile usw., auf die einzelnen Kreise und die dort angeschlossenen Ventile und Anlagenteile verteilt wird.

Um den eben beschriebenen Strömungsweg sicherzustellen, besitzt der Tragkäfig 10 eine Dichtlippe 37, die so ausgebildet und angeordnet ist, dass sie nur in der Regenerationsphase überströmt werden kann und so eine Aufteilung des Strömungspfades durch den Vorfilter 14 und den Zyklon 15 mit dem Sammelraum 25 erfolgt.

Der im Wesentlichen bisher beschriebene Strömungspfad ist derjenige, der während der Lastlaufphase eingenommen wird. Es versteht sich, dass in der Regenerationsphase, die während der Leerlaufphase stattfindet, die entsprechende umgekehrte Durchströmung eintritt, wobei abgeschiedene Verunreinigungen dann in die Atmosphäre überführt werden. Dies gilt sowohl für Verunreinigungen am Vorfilter 14 wie auch für feste und/oder flüssige Verunreinigungen, die sich im Sammelraum 25 aufgesammelt haben. Bei dieser umgekehrten Durchströmung der Kartusche 1 werden also auch die Zyklone 15 durchströmt. Auch abgeschiedenes partikelförmiges Material des Koaleszenzfilters 26 wird auf diese Art und Weise unter Umgehung der Zyklone 15 in die Atmosphäre abgeführt. Aufgenommene Feuchtigkeit des Trockenmittels 31 wird ebenfalls in die Atmosphäre abgeführt. Bei der Ausführungsform gemäß Fig. 1 kann der Vorfilter 14 auch in Wegfall kommen, so dass die verunreinigte Druckluft zuerst durch die Zyklone 15 fließt.

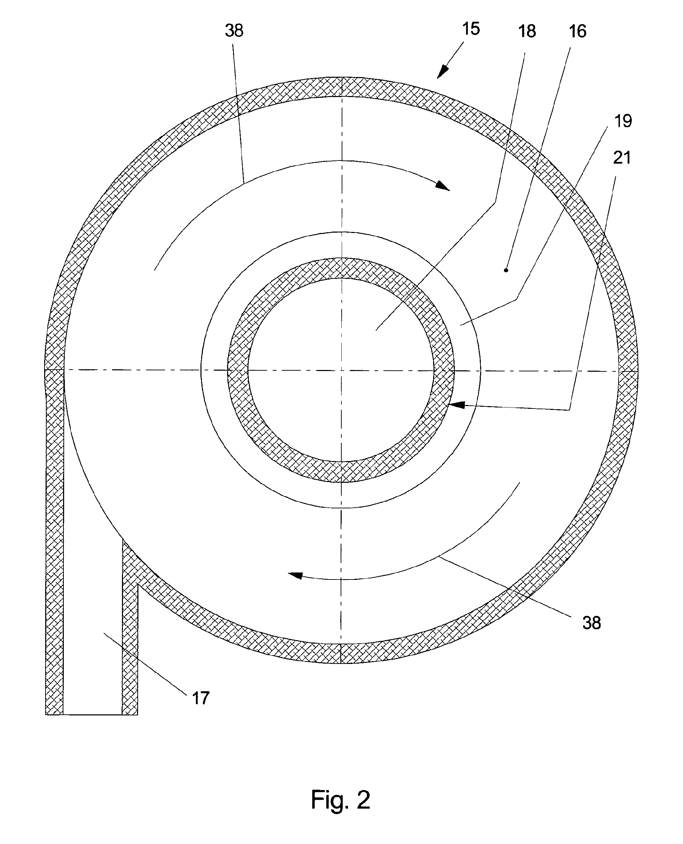

**Fig. 2** verdeutlicht den tangential angeordneten bzw. in das Gehäuse bzw. die Wandung 16 des Zyklons 15 einmündenden Einlass 17. Damit wird die schon beschriebene Drallströmung erzeugt, die sich über die Wandung 16 gemäß Pfeil 38 (Fig. 1 und 2) nach unten ergibt. Man erkennt in Fig. 2 auch sehr gut die geometrische Abstimmung und Ausbildung des Zyklons 15, insbesondere die beiden Auslässe 18 und 19 zueinander.

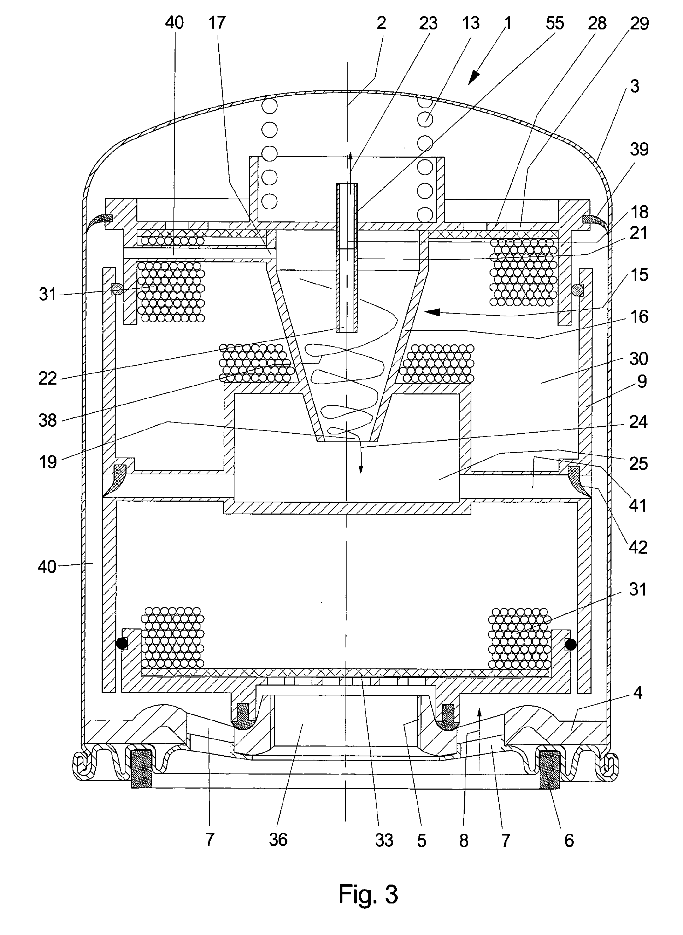

**Fig. 3** zeigt eine weitere Ausführungsform der Kartusche 1. Die Schraubplatte 4 ist ähnlich ausgebildet wie bei dem Ausführungsbeispiel der Fig. 1. Allerdings besitzt hier der Einsatz 9 eine etwas andere Form. Der Einsatz 9 trägt in seinem Inneren den Sammelraum 25. Es ist nur ein einziger Zyklon 15 vorgesehen, der als erstes Element im Strömungspfad angeströmt wird. Zu diesem Zweck weist der Deckel 28 eine Dichtlippe 39 auf. Damit gelangt die zu reinigende Druckluft über die Einströmöffnungen 7 gemäß Pfeil 8 und über eine Leitung 40 in den Einlass 17 des Zyklons 15. Der erste Auslass 18 ist auch hier als Rohr 21 ausgebildet. Sein freies Ende 22 reicht in den Mittelbereich der axialen Erstreckung des Zyklons 15. Die Position des freien Endes 22 des Rohres 21 relativ zu dem Zyklon 15 ist mit einem Gewinde 55 ver- bzw. einstellbar. Der zweite Auslass 19 des Zyklons 15 geht in den Sammelraum 25 über. Die gereinigte Druckluft wird über den ersten Auslass 18 gemäß Pfeil 23 nach oben abgeführt, kehrt ihre Strömungsrichtung um und gelangt über die Durchbrechungen 29 im Deckel 28 in den Innenraum 30, in dem das Trockenmittel 31 angeordnet ist. Der Sammelraum 25 steht mit sternförmig angeordneten, radial nach außen führenden Leitungen 41 in Verbindung. Die Leitungen 41 weisen überströmbare Dichtungen 42 auf.

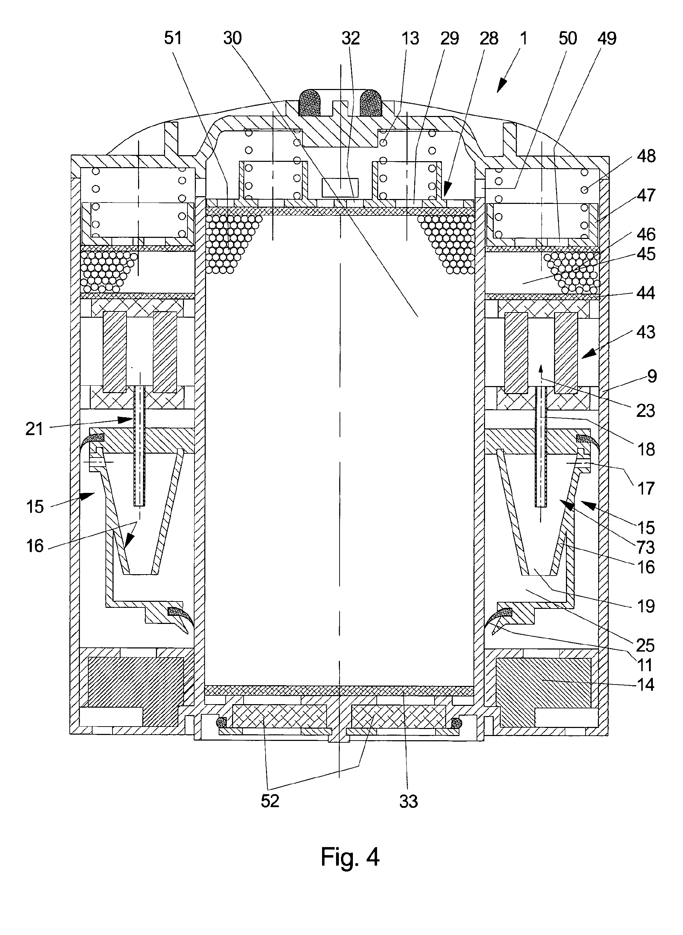

**Fig. 4** zeigt eine weitere Ausführungsform der Kartusche 1. Der auswechselbare Teil der Kartusche 1 besteht aus dem dargestellten Körper, der gleichsam eine Patrone bildet. Zu dieser Patrone gehört noch ein nicht dargestelltes Gehäuse 3, welches mehrfach verwendet wird und daher nicht austauschbar ausgebildet ist. Die Patrone bildet damit gleichsam einen Einsatz 9, der als Kunststoffformkörper ausgebildet sein kann. An dem Einsatz 9 sind die Einströmöffnungen 7 verwirklicht, so dass hier die zu reinigende Druckluft zunächst durch den Vorfilter 14 strömt. Sie wird dann einer Reihe von Zyklonen 15 zugeleitet, die über den Umfang verteilt vorgesehen sind. Die Druckluft gelangt auch hier über den Einlass 17 in das Innere der Wandung 16 des Zyklons 15. Es sei darauf hingewiesen, dass der Einlass 17 hier nicht in einem zylindrischen Teil der Wandung 16, sondern in einem Teil angeordnet ist, der ebenfalls bereits sich verjüngend ausgebildet ist. Über den ersten Auslass 18 gelangt die Druckluft gemäß Pfeil 23 nach oben, während die abgeschiedenen festen und/oder flüssigen Verunreinigungen über den zweiten Auslass 19 in den Sammelraum 25 übertreten. Die gemäß Pfeil 23 nach oben abströmende Druckluft gelangt in den Bereich eines Koaleszenzfilters 43, in welchem sie in zwei Teilströme aufgespalten wird. Die Druckluft tritt über eine Filzscheibe 44 in einen Raum 45 über, der mit einem ersten Trockenmittel 46 gefüllt ist. Ein ringförmiger Deckel 47, der unter dem Druck von Federn 48 steht, hält das erste Trockenmittel 46 im Raum 45 komprimiert. Die Druckluft strömt dann durch Durchbrechungen 49 über Öffnungen 50 im Einsatz 9 und über Durchbrechungen 29 im Deckel 28 in den Innenraum 30, in welchem sich ein zweites Trockenmittel 51 befindet. Die Druckluft strömt dann innerhalb des Raums 30 weiter nach unten, durchdringt die Filzscheibe 33 und durchströmt Nachfilter 52 im unteren Bereich des Einsatzes 9. Dieser Nachfilter 52 kann auch als Koaleszenzfilter ausgebildet sein. Es versteht sich, dass die Druckluft dann über entsprechende Leitungsverbindungen in einem Sockelteil, mit dem das nicht dargestellte Gehäuse 3 verbunden wird, in Verbindung steht. In der Regenerationsphase ergibt sich eine weitgehend umgekehrte Strömungsrichtung, wobei Dichtlippen entsprechend dem gewünschten Strömungspfad überströmt werden.

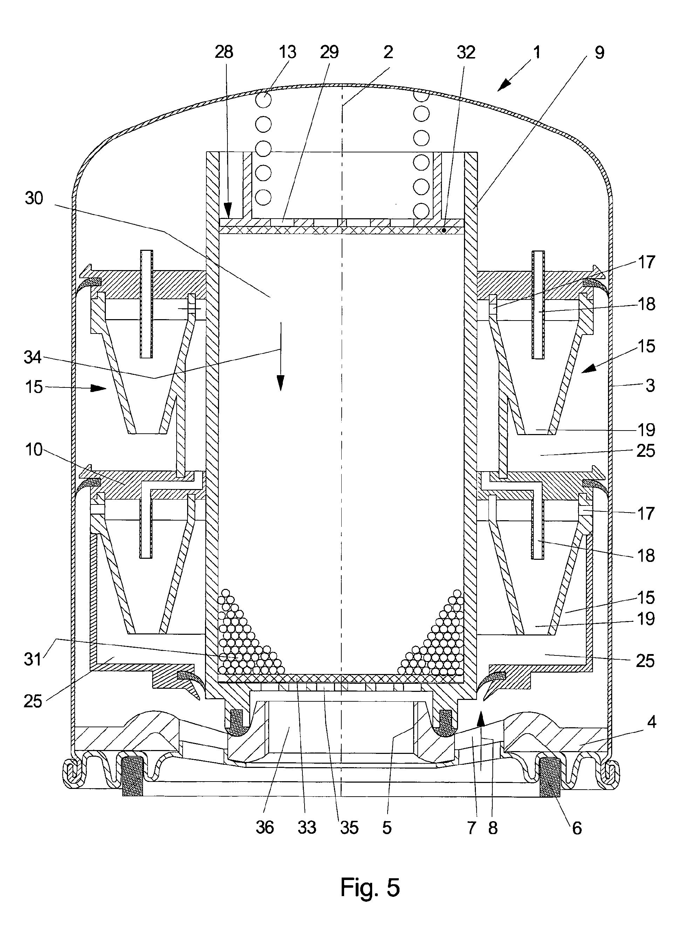

**Fig. 5** zeigt eine weitere Ausführungsform der Kartusche 1 mit ihrem Gehäuse 3 und Schraubplatte 4. Es sind hier mehrere Zyklone 15 über den Umfang verteilt angeordnet und zusätzlich noch gleichsam auf zwei Etagen untergebracht. Damit findet einerseits eine Parallelanordnung und andererseits eine Reihenschaltung der Zyklone 15 statt. Die entsprechenden Durchströmrichtungen in der Last- und in der Leerlaufphase ergeben sich aus der Darstellung.

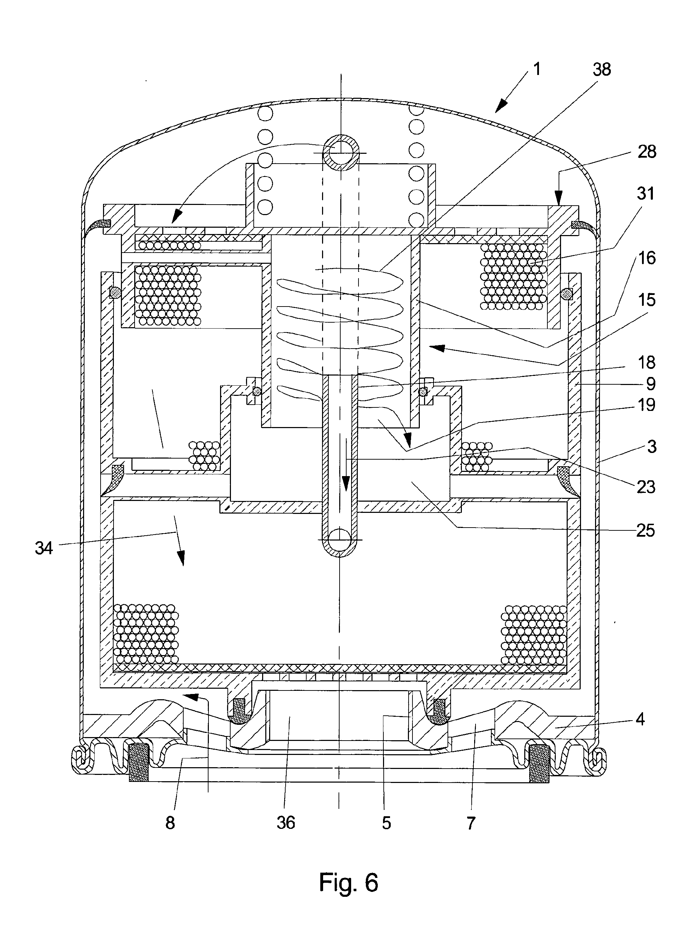

Die Kartusche 1 gemäß **Fig. 6** ist ähnlich aufgebaut wie das Ausführungsbeispiel der Fig. 3, weshalb hierauf verwiesen werden kann. Der einzige Zyklon 15 besitzt hier jedoch eine zylindrisch ausgebildete Wandung 16. Der erste Auslass 18 ist hier nicht nach oben aus dem Zyklon 15 herausgeführt, sondern nach unten. Der zweite Auslass 19 geht auch hier in den Sammelraum 25 über. Ansonsten kann auf die Beschreibung der Fig. 3 verwiesen werden.

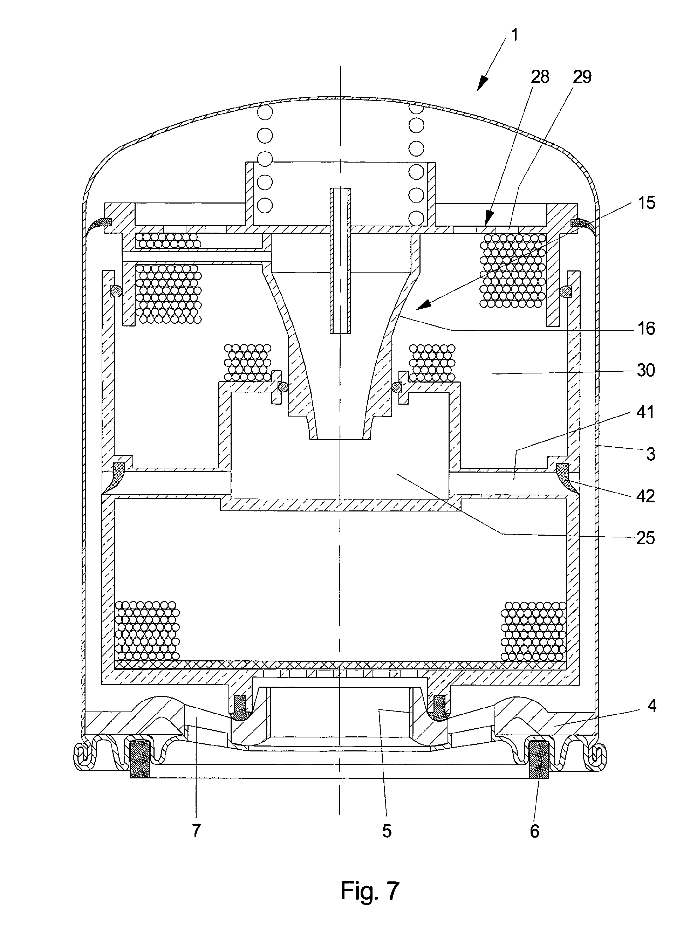

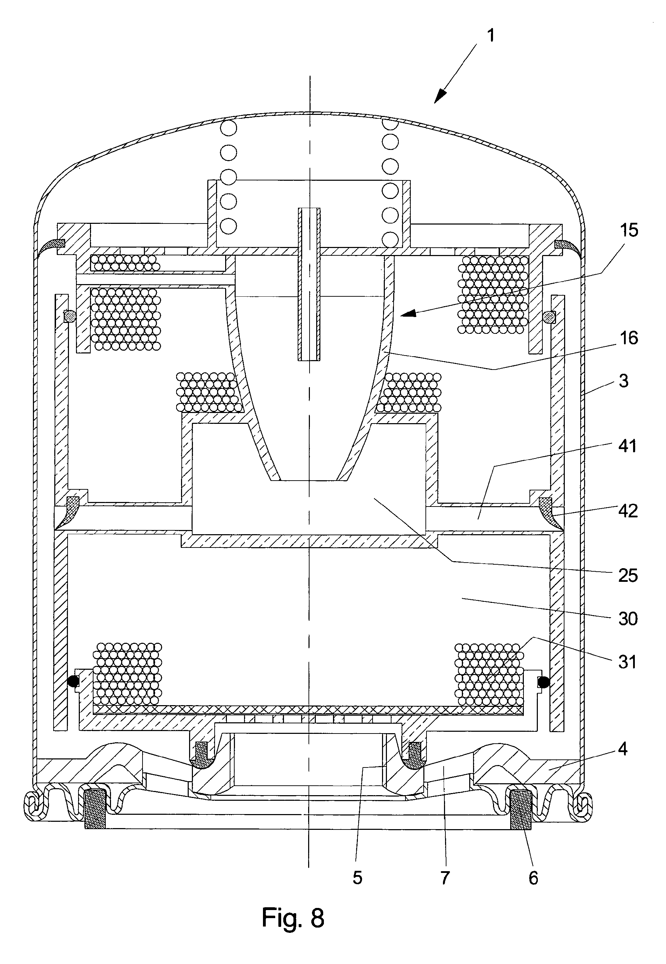

Bei den Ausführungsformen der **Fig. 7 und 8** ist erkennbar, dass die Wandung 16 des Zyklons 15 auch konvex oder konkav ballig verlaufen kann. Die Wandung 16 muss also nicht unbedingt zylindrisch oder kegelförmig ausgebildet sein. Bei diesen Ausführungsformen befindet sich der erste Auslass 18 oben, wenngleich er auch hier, wie auch bei sämtlichen anderen Ausführungsformen, auch nach unten führend vorgesehen sein könnte.

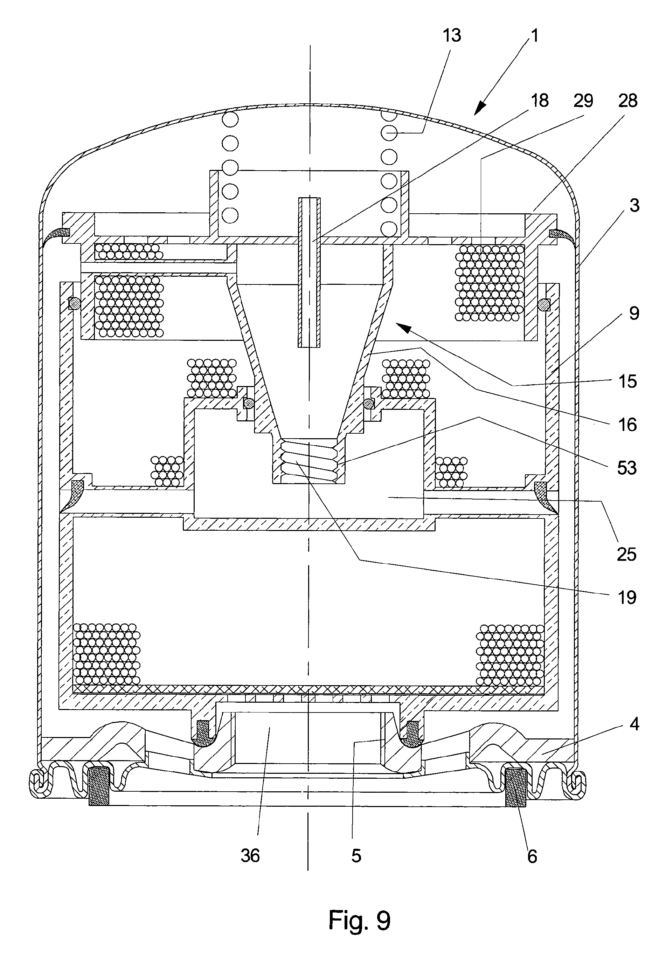

Die Ausführungsform gemäß **Fig. 9** schließt in weiten Bereichen an die Ausführungsform gemäß Fig. 3 an. Im Bereich des zweiten Auslasses 19 des Zyklons 15 ist ein Gewinde 53 vorgesehen, welches die Ableitung von Flüssigkeit und festen Verunreinigungen nach unten in den Sammelraum 25 begünstigt. Die sich nach oben erstreckende und gerichtete Sekundärströmung im Zyklon 15 kann damit die Verunreinigungen, die in den Sammelraum 25 gelangen, nicht erfassen und durch den ersten Auslass 18 nicht nach oben abführen.

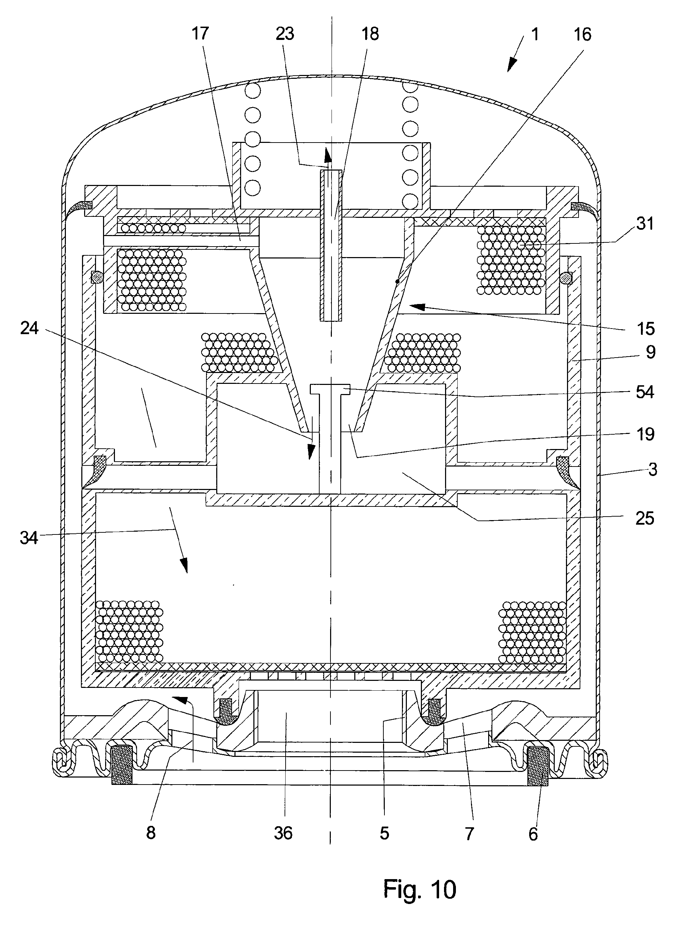

Eine weitere Möglichkeit zur Beeinflussung der Strömung innerhalb des Zyklons 15 zeigt **Fig. 10**. Hier ist eine Sperrplatte 54 vorgesehen, die von unten aus dem Sammelraum 25 in den Innenraum des Zyklons 15 einragt und sich dort verbreitert. Diese Sperrplatte 54 bildet damit einen Schild bzw. eine Sperre für eine sich ausbildende und nach oben gerichtete Sekundärströmung für die gereinigte Druckluft.

### BEZUGSZEICHENLISTE

- 1: Kartusche
- 2: Achse
- 3: Gehäuse
- 4: Schraubplatte
- 5: Gewinde
- 6: Dichtung
- 7: Einströmöffnung
- 8: Pfeil
- 9: Einsatz
- 10: Tragkäfig
- 11: Dichtlippe
- 12: Dichtung
- 13: Feder
- 14: grober Vorfilter
- 15: Zyklon
- 16: Wandung
- 17: Einlass
- 18: erster Auslass
- 19: zweiter Auslass
- 20: Achse
- 21: Rohr
- 22: Ende
- 23: Pfeil
- 24: Pfeil
- 25: Sammelraum
- 26: Koaleszenzfilter
- 27: Pfeil
- 28: Deckel
- 29: Durchbrechung
- 30: Innenraum
- 31: Trockenmittel
- 32: Filzscheibe
- 33: Filzscheibe
- 34: Pfeil
- 35: Durchbrechung
- 36: Mittelöffnung
- 37: Dichtlippe
- 38: Pfeil
- 39: Dichtlippe
- 40: Leitung
- 41: Leitung
- 42: Dichtung
- 43: Koaleszenzfilter
- 44: Filzscheibe
- 45: Raum
- 46: Trockenmittel
- 47: Deckel
- 48: Feder
- 49: Durchbrechung
- 50: Öffnung
- 51: Trockenmittel
- 52: Nachfilter
- 53: Gewinde
- 54: Sperrplatte
- 55: Gewinde

## Patentansprüche

1. Kartusche zum Reinigen von Druckluft in Druckluftbeschaffungsanlagen von Kraftfahrzeugen, mit einem Gehäuse (3), in welchem ein Behandlungsmittel und/oder ein Filtermittel untergebracht ist, wobei im Gehäuse (3) der Kartusche (1) ein Zyklon (15) vorgesehen ist, der einen tangential angeordneten Einlass (17) für die verunreinigte Druckluft, einen zentral angeordneten ersten Auslass (18) für die gereinigte Druckluft und einen zweiten Auslass (19) für die festen und/oder flüssigen Verunreinigungen in der Druckluft aufweist, **dadurch gekennzeichnet, dass** mehrere Zyklone (15) parallel und/oder in Reihe hintereinander geschaltet angeordnet sind.

2. Kartusche nach Anspruch 1, **dadurch gekennzeichnet, dass** eine Mehrzahl von Zyklonen (15) ringförmig verteilt im Gehäuse (3) der Kartusche (1) angeordnet sind.

3. Kartusche zum Reinigen von Druckluft in Druckluftbeschaffungsanlagen von Kraftfahrzeugen, mit einem Gehäuse (3), in welchem ein Behandlungsmittel und/oder ein Filtermittel untergebracht ist, wobei im Gehäuse (3) der Kartusche (1) ein Zyklon (15) vorgesehen ist, der einen tangential angeordneten Einlass (17) für die verunreinigte Druckluft, einen zentral angeordneten ersten Auslass (18) für die gereinigte Druckluft und einen zweiten Auslass (19) für die festen und/oder flüssigen Verunreinigungen in der Druckluft aufweist, insbesondere nach Anspruch 1 oder 2, **dadurch gekennzeichnet, dass** im Bereich des oder eines zweiten Auslasses (19) für die festen und/oder flüssigen Verunreinigungen eine Sperrplatte (54) angeordnet ist.

4. Kartusche nach einem der Ansprüche 1 bis 3, **dadurch gekennzeichnet, dass** als zentral angeordneter erster Auslass (18) ein rohrförmiges Element vorgesehen ist, dessen eines der Einströmung der gereinigten Druckluft dienendes Ende (22) unterhalb des tangentialen Einlasses (17) angeordnet ist.

5. Kartusche nach Anspruch 4, **dadurch gekennzeichnet, dass** das freie Ende (22) des rohrförmigen Elements etwa im Mittelbereich der axialen Erstreckung des Zyklons (15) angeordnet ist.

6. Kartusche nach einem oder mehreren der Ansprüche 1 bis 5, **dadurch gekennzeichnet, dass** der Zyklon (15) eine bevorzugt etwa vertikal angeordnete Achse (20) und eine Wandung (16) aufweist, die zylindrisch, kegelförmig oder sich ballig verjüngend ausgebildet ist.

7. Kartusche nach einem oder mehreren der Ansprüche 1 bis 6, **dadurch gekennzeichnet, dass** der Zyklon (15) an seinem einen Ende den Einlass (17) und an seinem anderen Ende den zweiten Auslass (19) aufweist.

8. Kartusche nach einem oder mehreren der Ansprüche 1 bis 7, **dadurch gekennzeichnet, dass** unter jedem Zyklon (15) ein Sammelraum (25) für die festen und/oder flüssigen Verunreinigungen aus der Druckluft vorgesehen ist, in den der zweite Auslass (19) mündet.

9. Kartusche nach einem oder mehreren der Ansprüche 1 bis 8, **dadurch gekennzeichnet, dass** im Bereich des zweiten Auslasses (19) für die festen und/oder flüssigen Verunreinigungen ein Gewinde (53) vorgesehen ist.

10. Kartusche nach einem oder mehreren der Ansprüche 1 bis 9, **dadurch gekennzeichnet, dass** der zweite Auslass (19) des Zyklons (15) einen Durchtrittsquerschnitt zu dem Sammelraum (25) aufweist, der größer als der Durchtrittsquerschnitt des ersten Auslasses (18) bemessen ist.
